# FASCICULE DE BREVET EUROPEEN

(11) **EP 0 681 939 B1**
(45) Date de publication et mention de la délivrance du brevet: **07.01.1999**
(21) Numéro de dépôt: 94810280.1
(22) Date de dépôt: 10.05.1994
(51) Int. Cl.: B60M 1/36, B60L 5/00

(54) **Installation de transport électrique**
Anlage für elektrischen Transport
Electrical transport installation

(43) Date de publication de la demande: 15.11.1995
(73) Titulaire: Saugy, Bernard, CH-1020 Renens (CH)
(72) Inventeur: Saugy, Bernard, CH-1020 Renens (CH)

(56) Documents cités:
- EP-A- 0 289 868
- FR-A- 2 613 883

## Description

La présente invention a pour objet une installation de transport électrique comprenant au moins un véhicule mu par au moins un moteur électrique alimenté par un dispositif au sol

On connaît des installations de transport comportant un véhicule mu par un moteur électrique alimenté par un dispositif au sol sans contact entre le dispositif et le véhicule.
La demande de brevet français n° 78 10675 n° de publication 2 387 138 expose, par exemple, une telle installation, dans laquelle des dispositifs à induction sont fixés dans le sol. Dans cette demande il est exposé en détail des dispositifs pour indiquer comment chaque inducteur peut être alimenté lorsqu'il se trouve sous un véhicule, mais rien n'est dit en ce qui a trait au passage du véhicule d'un inducteur à l'autre

Les brevets US 3 914 562 et GB 2 020 451 exposent aussi des installations de transport où les véhicules reçoivent leur énergie par induction magnétique. Mais dans ces brevets la piste est toujours sous tension et c'est le véhicule qui gère l'énergie.

La demande de brevet EP-A-0 289 868 décrit une installation du même type que celles définies ci-devant, mais où le problème résolu était, comme dans la demande FR 2 387 138, de ne mettre sous tension que les dispositifs a induction situés sous le véhicule. Toutefois le problème de la concordance des phases lors du passage d'un inducteur à l'autre n'a pas été résolu.

La présente invention a pour but de fournir une installation de transport comportant un ou plusieurs véhicules mus par un moteur électrique recevant son énergie par induction à partir de dispositifs fixés au sol, ne présentant pas les inconvénients des dispositifs connus.

L'installation de transport électrique, selon l'invention, comprend au moins un véhicule mu par au moins un moteur électrique alimenté par un dispositif au sol, le dispositif d'alimentation étant constitué d'inducteurs plats comprenant des enroulements situés au-dessous de la surface du sol ou dans un plan parallèle à cette dernière créant un champ magnétique transmettant l'énergie au véhicule lorsqu'il se trouve au-dessus des inducteurs, les inducteurs étant disposés en ligne et ayant des moyens pour les alimenter en courant que lorsqu'un véhicule se trouve au-dessus, caractérisée en ce que chaque inducteur est alimenté par l'un ou l'autre de deux générateurs successifs et en ce que chaque générateur alimente un groupe d'inducteurs de manière à ce qu'un véhicule en mouvement couvrant au moins trois inducteurs simultanément se trouve toujours au-dessus d'inducteurs alimentés par le même générateur. Le courant d'alimentation ayant de préférence une fréquence comprise entre 100 et 200 KHerz.

L'invention sera mieux comprise et ses avantages apparaîtront mieux à la lecture de la description de formes d'exécution, donnée à titre d'exemple, en regard des dessins sur lesquels :
- la figure 1: représente schématiquement une partie d'une installation au sol d'une forme d'exécution de l'invention,
- la figure 2: représente une coupe schématique d'une installation au sol d'une autre forme d'exécution,
- la figure 3: représente schématiquement un véhicule selon une forme d'exécution de l'invention.

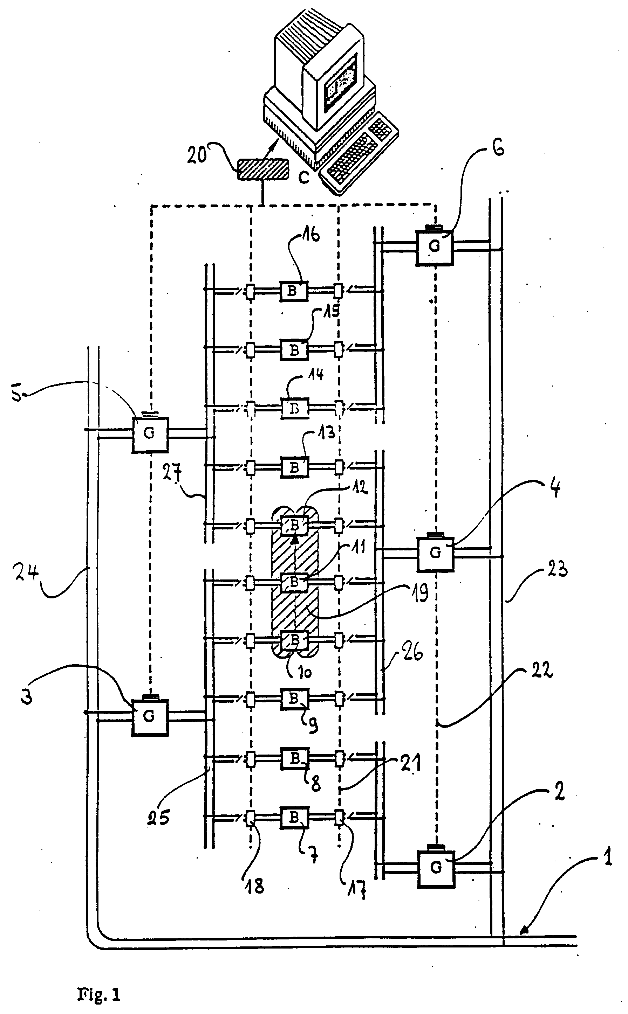

L'installation représentée à la figure 1 a pour but de réaliser un réseau de véhicules automatiques, par exemple un réseau de transport public. Le réseau comprend une multitude de véhicules identiques comportant, par exemple, des moteurs électriques dans deux roues et des moyens déclenchables assurant un guidage automatique au-dessus de l'installation au sol. L'installation au sol comprend une ligne d'arrivée de courant électrique 1 alimentant deux bus 23 et 24 qui alimentent une succession de générateurs G 2, 3, 4, 5 et 6. Chaque générateur alimente un bus 25 en courant à basse fréquence, en particulier de 140 KHerz. Le bus 25 du générateur 3 alimente cinq inducteurs B 7, 8, 9, 10 et 11. De même, le bus 26 du générateur 4 alimente les inducteurs 9 à 13, et le bus 27 du générateur 5 les inducteurs 12 à 16. Comme on peut le constater, chaque inducteur peut être alimenté par deux générateurs différents. Par exemple, l'inducteur 7 peut être alimenté par le générateur 2 ou par le générateur 3 suivant la position des dispositifs de commande 17 et 18. Pour rendre plus lisible la figure 1 les dispositifs de commande des inducteurs 8 à 16 ne comportent pas de signe de référence, mais ils sont semblables à ceux de l'inducteur 7.

Un bus de commande 22 relie les générateurs à un dispositif de commande 20. De même tous les dispositifs de commande des inducteurs sont reliés au dispositif de commande 20. Chaque inducteur dispose dans son environnement de moyens de détection lui permettant de savoir si un véhicule se trouve au-dessus. Ces moyens peuvent être de toute sorte, magnétiques ou non.

Le fonctionnement de l'installation se fait de la manière suivante. Un véhicule non représenté comportant un patin représenté par la zone hachurée 19 se trouve au-dessus des inducteurs 10, 11 et 12 et se déplace vers le haut de la figure selon la flèche indiquée. Au moment où le patin du véhicule est au-dessus des trois inducteurs 10, 11 et 12, ces derniers sont alimentés en courant par le générateur 4 au moyen du bus 26. Puis le véhicule avance jusqu'au-dessus de l'inducteur 13, alors le dispositif de commande coupe l'alimentation de l'inducteur 10 et enclenche celle de l'inducteur 13. Les inducteurs 11 à 13 sont toujours alimentés par le générateur 4. Le véhicule continuant son mouvement, il arrive au-dessus de l'inducteur 14, à ce moment le dispositif de commande 20 coupe l'alimentation des inducteurs 11, 12, 13 par le générateur 4 et enclenche l'alimentation des inducteurs 12, 13, 14 par générateur 5. Et ainsi de suite à mesure que le véhicule avance. Comme on peut le constater, le patin du véhicule se déplace toujours au-dessus d'inducteurs alimentés par le même générateur, ce qui évite tout problème de déphasage.

Les inducteurs d'une installation selon l'invention sont constitués d'enroulements en spiral dans un plan sans noyau métallique. Ils peuvent être de forme circulaire de préférence, mais peuvent aussi être de forme carrée, rectangulaire, elliptique, ovale.

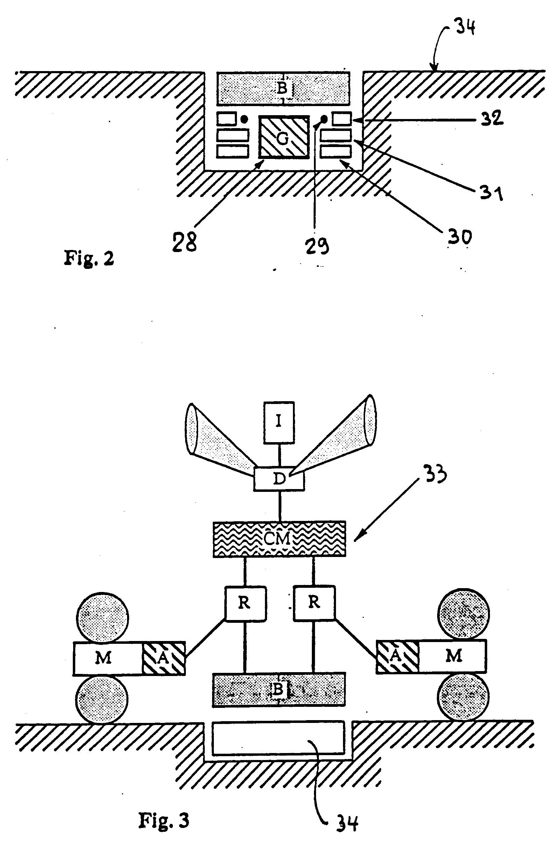

La figure 2 représente une coupe schématique montrant comment pourrait être disposés les différents éléments constituant le dispositif au sol. Comme on le voit, le bobinage B constituant l'inducteur est disposé juste au niveau de la chaussée 34. On trouve en dessous de l'inducteur le générateur 28 et sur les côtés le bus d'information 29, Le bus d'alimentation basse fréquence 31 et le bus d'alimentation électrique des générateurs 30, enfin le dispositif de commande de l'activation des bobines 32. Comme on peut le constater, l'ensemble ne prend que très peu de place dans la chaussée.

La figure 3 représente un schéma de véhicule 33 destiné à circuler sur une installation au sol du genre de celle décrite ci-devant. Ce véhicule comporte des moteurs M disposés dans les roues et des dispositifs de commande d'activation CM, de régulation R et d'activation A de ces moteurs permettant de régler la vitesse de chaque véhicule. Comme le véhicule est destiné à circuler sans que personne ne le conduise, il comporte un détecteur D de proximité d'obstacle, par exemple, par radar ou tout autre dispositif connu. Il comprend encore un dispositif d'interface l permettant à l'usager d'entrer en contact avec le véhicule, permettant à l'usager :
- d'arrêter d'urgence le véhicule
- de contrôler éventuellement le paiement de la course par l'usager et de gérer la mise à disposition
- de conduire le véhicule alimenté par des batteries ou par un autre type de moteur hors de l'installation au sol
- de contrôler l'état du véhicule.

Enfin le véhicule comportera aussi une unité de conduite coordonnant les diverses mesures et commandes pour :
- guider et maintenir automatiquement le véhicule au-dessus des inducteurs
- arrêter le véhicule encas d'obstacle sur le tracé (par exemple piéton)
- suivre les consignes de l'usager pour les commandes autorisées.

Dans une forme d'exécution avantageuse de l'invention l'installation comprendra une pluralité de véhicules circulant sur un circuit en forme de boucle. Les véhicules étant constamment en mouvement ne s'arrêtant qu'un temps relativement court pour laisser les usagers monter et descendre. De plus, les véhicules circuleront de manière automatique en suivant l'installation au sol, mais chaque usager moyennant une taxe spéciale pourra disposer du véhicule hors de l'installation au sol pour un temps déterminé.

## Revendications

1. Installation de transport électrique comprenant au moins un véhicule mu par au moins un moteur électrique alimenté par un dispositif au sol, le dispositif d'alimentation étant constitué d'inducteurs plats (7-16; fig. 1) comprenant des enroulements situés au-dessous de la surface du sol ou dans un plan parallèle à cette dernière créent un champ magnétique, transmettent l'énergie au véhicule lorsqu'il se trouve au-dessus des inducteurs, les inducteurs étant disposés en ligne et ayant des moyens (2-6 ; fig. 1) pour les alimenter en courant que lorsqu'un véhicule se trouve au-dessus, caractérisée en ce que chaque inducteur (7-16 ; fig. 1) est alimenté par l'un ou l'autre de deux générateurs successifs (2-3; 3-4; 4-5; 5-6 ; fig. 1) et en ce que chaque générateur alimente un groupe d'inducteurs (7-11, 3 ;9-13, 4, 12-16, 5 ; fig. 1) de manière à ce qu'un véhicule en mouvement couvrant au moins trois inducteurs (10, 11 et 12 ; fig. 1) simultanément se trouve toujours au-dessus d'inducteurs alimentés par le même générateur (4, fig 1).

2. Installation selon la revendication 1 caractérisée en ce qu'elle comprend un grand nombre de véhicules et que les véhicules comprennent des moyens pour stocker l'énergie, ce qui les rend autonomes pendant un temps déterminé et des moyens, que l'on peut enclencher et déclencher à volonté, pour les guider automatiquement au-dessus des inducteurs.

3. Installation selon l'une des revendications 1 et 2, caractérisée en ce qu'un premier générateur (3, fig. 1) alimente un groupe de cinq inducteurs (7-11, fig. 1), un second générateur (4, fig 1) alimente trois inducteurs (9-11, fig 1) dudit groupe et deux inducteurs (12, 13, fig. 1) du groupe suivant (12-16, fig. 1) et ainsi de suite; de cette manière tout véhicule couvrant trois inducteurs (10, 11 et 12, fig.1) se trouve au-dessus de trois inducteurs alimentés par le même générateur (4, fig. 1).

4. Installation selon l'une des revendications 1 à 3, caractérisée en ce que le courant a une fréquence comprise entre 100 KHerz et 200 Kherz.

## Claims

1. Electric transport system comprising at least one vehicle driven by at least one electric motor fed from a ground-based source,
characterised in that
the power source consists of flat inductors comprising windings located in the ground plane or in a plane parallel to the ground and generating a magnetic field transmitting energy to the vehicle when above the inductor, the inductors being linearly arrayed and being fitted with current-feeding means when a vehicle is above, each inductor being alternatingly fed by two generators and each generator feeding one set of inductors in such a manner that a moving vehicle covering at least three inductors simultaneously will always be above inductors fed from the same generator.

2. System as claimed in claim 1, characterized in that it comprises a large number of vehicles and that the vehicles are fitted with energy-storing means making them autonomous for a given time and with means that can be engaged and disengaged at will to guide them automatically above the inductors.

3. System as claimed in either of claims 1 and 2, characterized in that a first generator feeds a set of five inductors, a second generator feeds three inductors of said set and two inductors of the following set, and so on; in this manner any vehicle covering three inductors shall be located above three inductors fed from the same generator.

4. System as claimed in one of claims 1 through 3, characterized in that the power frequency is between 100 kHz and 200 kHz.

## Patentansprüche

1. Elektrische Fördereinrichtung, bestehend aus mindestens einem Wagen, der durch mindestens einen Elektromotor angetrieben wird, der durch eine Bodenvorrichtung versorgt wird, dadurch gekennzeichnet, daß die Versorgungsvorrichtung von flachen Induktoren gebildet wird, die Wicklungen umfassen, die in der Ebene des Bodens oder in einer zu dem Boden parallelen Ebene angeordnet sind und ein Magnetfeld erzeugen, das die Energie zu dem Wagen überträgt, wenn er sich über dem Induktor befindet, wobei die Induktoren in einer Linie angeordnet sind und Mittel aufweisen, um sie mit Strom zu versorgen, wenn sich ein Wagen darüber befindet, wobei jeder Induktor alternative durch zwei Generatoren versorgt wird und jeder Generator eine Gruppe von Induktoren versorgt, so daß sich ein in Bewegung befindlicher Wagen, der mindestens drei Induktoren gleichzeitig abdeckt, immer noch über Induktoren befindet, die von demselben Generator versorgt werden.

2. Einrichtung nach Anspruch 1, dadurch gekennzeichnet, daß sie eine große Anzahl von Wagen umfaßt und daß die Wagen Mittel zur Speicherung der Energie, wodurch sie eine bestimmte Zeit hindurch autonom werden, und Mittel zum beliebigen Ein- und Ausschalten umfassen, um sie automatisch über die Induktoren zu führen.

3. Einrichtung nach einem der Ansprüche 1 und 2, dadurch gekennzeichnet, daß ein erster Generator eine Gruppe von fünf Induktoren versorgt, ein zweiter Generator drei Induktoren dieser Gruppe und zwei Induktoren der folgenden Gruppe usw. versorgt, wodurch sich auf diese Weise jeder Wagen, der drei Induktoren abdeckt, über drei Induktoren befindet, die von demselben Generator versorgt werden.

4. Einrichtung nach einem der Ansprüche 1 bis 3, dadurch gekennzeichnet, daß der Strom eine Frequenz zwischen 100 KHertz und 200 KHertz besitzt.
